# EUROPEAN PATENT APPLICATION

(11) **EP 1 971 177 A1**
(43) Date of publication of application: **17.09.2008**
(21) Application number: 08250818.5
(22) Date of filing: 11.03.2008
(51) Int. Cl.: H04Q 7/38

(54) **Method for implementing home zone application in mobile communication networks**

(30) Priority: 13.03.2007 GB 0704838; 03.08.2007 GB 0715139
(71) Applicant: Hutchinson Whampoa Thre G IP (Bahamas) Limited, Nassau, New Providence (BS)
(72) Inventor: Hepsaydir, Erol, Maidenhead Berkshire SL6 5JP (GB); Binucci, Nicola, Maidenhead Berkshire SL6 6LG (GB)
(74) Representative: Crawford, Andrew Birkby

(57) **Abstract**

The invention provides a method for implementing a home zone application in a mobile communication networks wherein a short range network enabled GPS unit positioning (1) in a home zone user's home returns its location co-ordinates to the user's handset (2), when the handset (2) is within the network range of the GPS unit (1). This location is compared with the stored home location cell id provided on user registration. If both locations are within an allowable range, then the handset is considered to be in the vicinity of the users home and is charged a home zone tariff until the handset leaves the home vicinity.

## Description

### Field of the Invention

The present invention relates to a method for implementing Home Zone Application in mobile communication networks. Particularly, this invention relates to a method of providing information to enhance the accuracy of locating mobiles in UMTS (Universal Mobile Terrestrial System) networks for the Home Zone (HZ) Application. Home Zone application is a Location Based Service to charge the call depending on where the call is initiated. If the call is initiated at Home, the call is charged Home Zone tariff.

### Background of the Invention

It is well known that Location Services are major offerings by 3G (Third Generation) UMTS network operators. There are various ways to locate a mobile terminal. Most commonly used techniques are A-GPS (Assisted Global Positioning System) and Cell_ID. A-GPS does not work reliably indoors and Cell ID based Home Zone service is not accurate enough to implement a cost effective Home Zone service.

The present invention describes a Home Zone service implementation, which may prove to be more feasible for a network operator to deploy. Here a user is provided with a positioning device associated with the user's handset and arranged to communicates its co-ordinates with the handset via a short range communication link when the handset is in the vicinity of the device so that a decision can be made whether home zone tariff should be applied or not for calls initiated by the handset.

### Summary of the Invention

The present invention provides a method for implementing a home zone application in a mobile communication networks comprising the steps of storing a location id for the home of a home zone user, on registration for home zone service provided by a network operator; placing a positioning unit capable of short range network communication within the home zone user's home, said positioning unit being capable of calculating its location co-ordinates; establishing connectivity between the positioning unit and the user's handset when said handset is present within the communication range of the positioning unit; communicating the location co-ordinates of the positioning unit to the handset; comparing the location co-ordinates of the positioning unit and the stored user's home location id; determining if the handset is in the vicinity of the user's home ; and charging home zone tariff by a decision server in the operator's network if determined that the handset is in the vicinity of the user's home.

### Brief Description of the Drawings

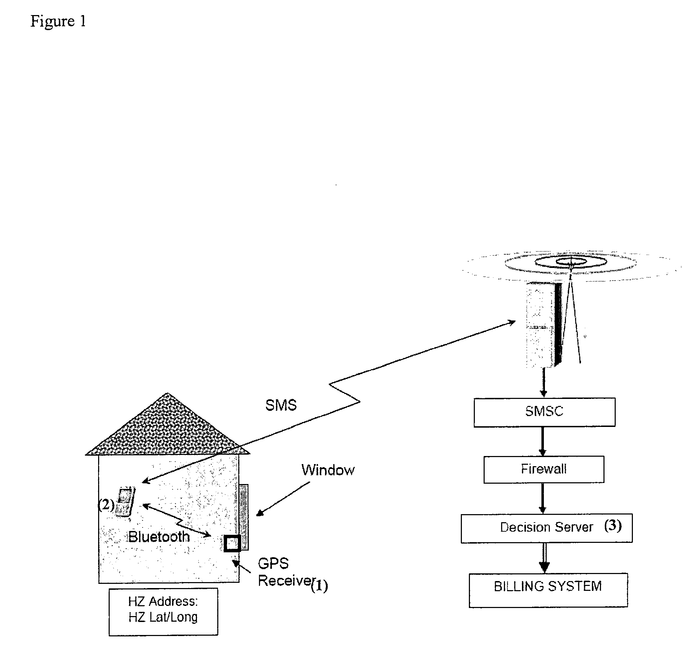

In order that the present invention be more readily understood embodiments will now be described by way of example with reference to the accompanying drawings, in which:-
Fig. 1 shows a block diagram of an arrangement according to a first embodiment of the present invention.

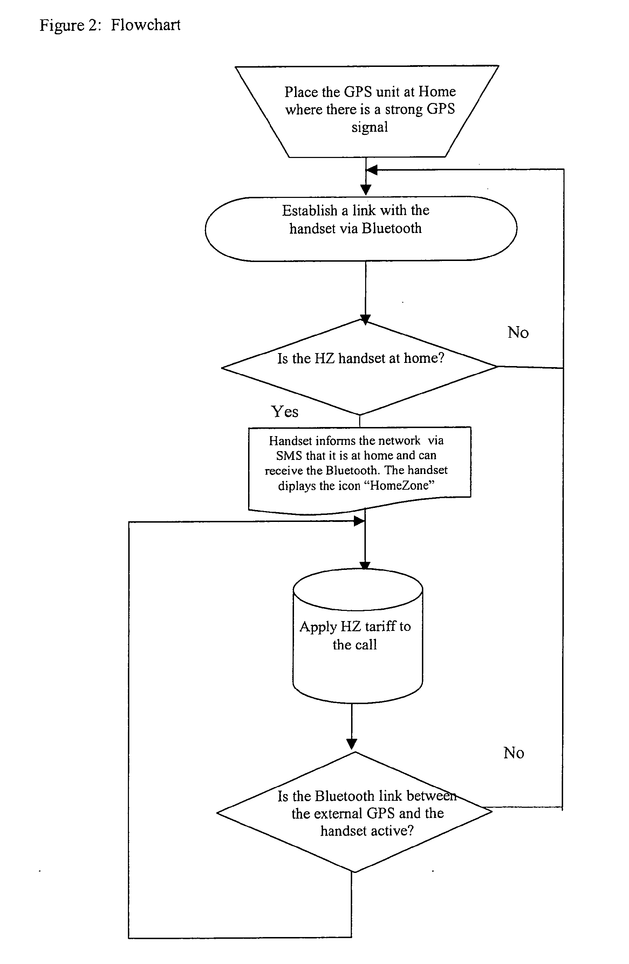

Fig. 2 is a flow chart for explaining the operation of the arrangement in Fig. 1.

### Detailed Description of the Invention

The invention may be implemented in 3G UMTS networks. However the concept can be applied to other network standards such as GSM, CDMA, and IS95 etc.

This invention makes the Home Zone service implementation more feasible for the operator to deploy. The user should pre- register with their network provider/operator for the HZ service. The user's home address will be converted to the corresponding latitude and latitude co-ordinates. These HZ lat/long will then be stored in user's handset itself or in the universal subscriber identity module (USIM) within the handset, along with a specific software.

The invention consists of several elements, more specifically:
- A GPS receiver unit (1) with inbuilt short range connectivity.
- A client in the user's handset (2) to interpret the information received from the GPS. The handset is arrange to be Bluetooth enabled. However it is to be understood that any short range wireless communication technology can be used in the handset to implement the invention.
- A decision Server (3) in the data centre to communicate with the HZ handset and to interface with the Billing System and IN platform to apply HZ tariff to the calls made at home.

### Working of the Invention:

The handset (2) is configured to be capable of short range communication with other devices , preferably using Bluetooth . A Global Positioning System (GPS) receiver unit, also enabled with Bluetooth or other short range communication will be assigned to the user. The user will place the external GPS unit (1) close to a window etc. or any suitable area where there is a strong GPS signal. The GPS unit (1) is configured to communicate its measured location via Bluetooth to the handset (2) as soon as the handset (2) enters the Bluetooth range. The handset (2) will then compare the measured lat/long from the GPS unit (1) with the HZ lat/long stored in the USIM. If there is a match, it is indicative that that the handset (2) is at home. The handset (2) will then send a message to a decision server (3) of the network operator, preferably in the form of an SMS indicating the match and/or the measured lat/long from the GPS unit (1) for the DS to make a decision on whether to charge home zone tariffs. The decision server (3) will acknowledge the receipt of SMS from the handset (2) and the handset (2) could turn on a home zone indicator, if one is available on the handset (2) display. The decision server (3) will start to apply a home zone tariff. The invention is considered as an 'end to end' concept. When the user leaves home, the handset (2) will no longer have Bluetooth connectivity with the GPS unit (1) placed at the home. Therefore the handset (2) is configured to inform the decision server (3) by SMS that the connectivity is lost , so that HZ tariff is not applied anymore as the user has left home.

The decision Server (3) is installed in the data centre of the operator network. The HZ user is registered to the network with a HZ tariff. The user's HZ address is converted to lat/long and stored in the decision server (3) and in the handset (2). An external GPS unit(1) is assigned to the handset (2). The unit is a small hardware device that communicates with the handset (2) via Bluetooth via a secure link. The information between the GPS unit (1) and the handset (2) is protected to reduce the fraud. The GPS unit (1) may have the functionality to measure the latitude and longitude, apply encryption on the latitude and longitude information and to search for the particular HZ handset (2) Bluetooth connectivity to communicate

The GPS unit (1) starts transmitting its measured lat/long via Bluetooth. Since the external GPS unit (1) is installed at HZ location, this information should be the latitude and longitude of the user's address where HZ tariff is registered in the network.

Once the HZ handset (2) enters the Bluetooth coverage area at home, the handset (2) receives the measured latitude and longitude information from the GPS unit(1) via Bluetooth and compares them with the HZ address latitude and longitude that are stored in the handset (2) using an algorithm. If they match, the handset (2) sends an SMS to the decision server (3) indicating that the handset (2) is very close to the external GPS unit (1) located at home. It is to be noted that in the present invention notification to the decision server (3) is not restricted to be only via SMS. It could equally be via an IP wireless connection. This algorithm which compares the measured user location derived from the GPS unit (1) with the accepted Home Location is described above as being calculated in the handset (2). However it is to be noted that it is equally possible that the handset (2) would pass this measured GPS lat/long back to the network, where the comparison is made with the user Home lat/long before returning the at home status i.e. HZ tariff status. This alternate comparison logic may also be considered to be a more secure implementation as the GPS's encryption of location data can be unlocked by the network with little scope for the handset (2) to provide wrong location information (i.e. cryptographic keys to decrypt the information will not known to the 'man-in-the-middle' handset (2)). It may also be more practical from the operations/logistics point-of-view as the mobile communication operator's do not then need to provide their handset (2) stock and GPS (1) stock in set pairs pre-provisioned with shared secrets.

If the system decides that the handset (2) is at home, the handset (2) turns on HZ indicator on the handset (2) display

The decision Server informs the Billing system to apply HZ tariff for all calls until the handset (2) loses the Bluetooth connectivity with the external GPS unit (1).

If the Bluetooth connectivity is lost, the handset (2) turns OFF the HZ indicator on the display and informs the decision server (3) that it is no longer at home.

This solution reduces fraud significantly. If the HZ user tries to take the external GPS unit (1) away from home and try to claim HZ tariff, the handset (2) or the decision server (3) will immediately detect the fraud since the measured GPS lat/long from the GPS unit(1) would not match with the HZ lat/long stored in the handset (2) and decision server (3) .

As mentioned above, the handset (2) used in the present invention may be provided with a client for interpreting location information. This client in the handset (2) may perform the functions on the handset (2) such as keeps the Bluetooth always ON , so that the connectivity with the GPS can be immediately recognised.

As an enhancement, it may also switch the Bluetooth ON when the handset (2) detects the Home Zone cell-id, which could be known to the network operator on user registration. There are various ways to store the HZ Cell IDs as follows:
- The cell-ids are stored in the USIM (user subscriber identity module) when the user purchases the Home Zone product from a store.
- The handset (2) updates the cell-ids stored in the USIM observed when the handset (2) is at home.

The handset (2) client is also configured to search for the Bluetooth connectivity with the external GPS unit (1), decrypt the information received from the GPS unit (1) via Bluetooth and compare the measured lat/long received from the GPS unit (1) with the lat/long of the HZ address stored in the USIM for that particular HZ user. If both are within 50-100 m the handset (2) then sends an SMS to the decision server (3) and reports that the HZ handset (2) is very close to the external GPS unit (1) which is located at home. As mentioned above the comparison logic may alternatively be implemented at a network level rather than the handset (2).

Upon receipt of SMS Acknowledgement from the decision server (3), the client in the handset (2) will turn ON the HZ indicator on the display. Decision server (3) shall start applying HZ tariff to the calls made by that particular handset (2) until the handset (2) leaves the HZ area..

The client in the handset (2) detects a loss of Bluetooth connectivity between the GPS unit (1) and the handset (2) then after a pre-determined time, it will send an SMS to the decision server (3) indicating that the HZ handset (2) is not located at home anymore. As previously mentioned, the invention is not restricted to SMS notification, and can be implemented in various other ways such as via IP connections etc. On leaving the home vicinity, the client could turn OFF the HZ indicator on the display

Further enhancements and preferred features of the present invention could be to provide security against fraud and accuracy in applying the HZ tariff, as described below:

### Security Provisions

In order to avoid fraud caused by a fake GPS accessory providing fake longitude and latitude information, a validated and secured link must be provided.
At the service registration the user receives a unique code from the operator. A key generator in the handset (2) uses the code as input to generate the key. The same key generator is also installed in the GPS unit (1). The handset (2) provides the input code to the GPS unit (1) through the Bluetooth link.
The handset (2) receives the longitude/latitude information from the GPS unit (1) and the key. The handset (2) compares the longitude/latitude and the key with the information stored in the USIM. If they match, the link is considered authenticated. The key generator may produce different keys depending on e.g. date or time using the same code as input.

Alternatively, even if the comparison logic for location interpretation is located at the network level, it can still be considered as a secure implementation. This is secure since the GPS's encryption of location data can be unlocked by the network with little or no scope for the handset (2) to provide wrong location information, even if tampered with to do so. This is because cryptographic keys to decrypt the information will not be known to the 'man-in-the-middle' handset (2) and can be accessed only at the network level. So if the user is in another place, it will not be possible to compute tariff based on home zone charges.

### Accuracy in applying tariffs

In some territories mobile communication operators may have very strict criteria imposed on them on billing accuracy. For example, the level of accuracy that may be needed could be less than 1:100,000 errors on overcharging events, and less than 1:20,000 on undercharging.
Therefore accuracy can be enhanced by the present invention by providing a display to the user that Home Zone tariff was active, only once it had received confirmation from the network that the billing systems of the operator had changed the user's charging status to the HZ tariff. This could preferably be a confirmation response from the billing system, or possibly inferred from an SMS or any other mean if it is sent requesting a delivery receipt to be returned.

Therefore there is a need to keep the HZ tariff indicator (e.g. display) in sync with the actual status in the network. If for some reason in some network, there is scope for the solutions to get out of synchronisation, it may be in general more sensible to design the billing system to undercharge than overcharge.

## Claims

1. A method for implementing a home zone application in a mobile communication networks comprising the steps of:
(a) storing a location id for the home of a home zone user, on registration for home zone service provided by a network operator ;
(b) placing a positioning unit (1) capable of short range network communication within the home zone user's home, said positioning unit (1) being capable of calculating its location co-ordinates;
(c) establishing connectivity between the positioning unit (1) and the user's handset (2) when said handset (2) is present within the communication range of the positioning unit (2);
(d) communicating the location co-ordinates of the positioning unit (1) measured in step (b) to the handset (2) ;
(e) comparing the location co-ordinates of the positioning unit (1) of step (b) and the stored home location id of step (a) ;
(f) determining if the handset (2) is in the vicinity of the user's home ; and
(g) charging home zone tariff by a decision server (3) in the operator's network if determined in step (f) that the handset (2) is in the vicinity of the user's home

2. The method as claimed in claim 1 wherein the positioning unit (1) is a GPS unit.

3. The method of claim 1 wherein the home location id (1) is stored in the form of location co-ordinates.

4. The method as claimed in claim 1 wherein the positioning unit (1) and the handset (2) are Bluetooth enabled.

5. The method as claimed in claim 1 wherein home location id of step (a) is stored on a User SIM on the handset (2).

6. The method as claimed in claim 5 wherein the comparison of step (e) is done in the handset (2).

7. The method as claimed in claims 5 and 6 wherein step (f) comprises determining if the difference in the stored home location id and the positioning unit's co-ordinates is within a predefined allowable range, and if so, sending a message to the decision server (3) indicating that the handset is in the home vicinity.

8. The method as claimed in claim 1 wherein the home location id of step (a) is stored in the decision server (3).

9. The method as claimed in claim 8 wherein in step (e) handset (2) send a message to the decision server (3) containing the co-ordinates of the home location id and the coordinates of the positioning unit (2) such that the comparison of both co-ordinates is done in the decision server (3).

10. The method as claimed in claims 8 and 9 wherein step (f) comprises determining if the difference in the stored home location id and the positioning unit's co-ordinates is within a predefined allowable range.

11. The method as claimed in claims 7 and 10 wherein the allowable difference between both co-ordinates in within 50- 100 m.

12. The method as claimed in claim 1 wherein security against detection of fraudulent positioning co-ordinates is provided by issuing the user with a unique code which is used in key generators installed in the handset (2) and the positioning unit (1) for automatically generating cryptographic keys.

13. The method as claimed in claim 1 wherein connectivity between the positioning unit (1) and handset (2) is terminated when the handset (2) leaves the network range of the positioning unit (1).

14. The method as claimed in claim1 wherein an indication on the handset (2) is turned ON if home zone tariff is being applied and OFF when the home zone tariff is not being applied.
